# EUROPÄISCHE PATENTSCHRIFT

(11) **EP 3 885 613 B1**
(45) Veröffentlichungstag und Bekanntmachung des Hinweises auf die Patenterteilung: **26.07.2023**
(21) Anmeldenummer: 20164763.3
(22) Anmeldetag: 23.03.2020
(51) Int. Cl.: F16K 1/20, F16K 1/22, F16K 31/06, H01F 7/14

(54) **RANDGESTAUCHTER KIPPANKER FÜR EIN FAHRZEUGMAGNETVENTIL**
EDGE-SEALED TILTING ANCHOR FOR A VEHICLE MAGNETIC VALVE
ANCRAGE BASCULANT À BORD COMPRESSÉ POUR UNE ÉLECTROVANNE DE VÉHICULE

(43) Veröffentlichungstag der Anmeldung: 29.09.2021
(73) Patentinhaber: KNORR-BREMSE Systeme für Nutzfahrzeuge GmbH, 80809 München (DE)
(72) Erfinder: MATAR, Maher, 6095 Stuttgart (DE); EISENBERGER, Andreas, 72622 NÜRTINGEN (DE)

(56) Entgegenhaltungen:
- US-A1- 2007 239 042
- US-A1- 2019 360 609
- Anonymous: "5 euro cent coin", Wikipedia , 5. November 2018 (2018-11-05), XP055728361, Gefunden im Internet: URL:https://web.archive.org/web/2019032006 5549/https://en.wikipedia.org/wiki/5_euro_ cent_coin [gefunden am 2020-09-07]

## Beschreibung

Die vorliegende Erfindung bezieht sich auf ein Fahrzeugmagnetventil mit einem randgestauchten Kippanker und auf ein Verfahren zur Herstellung eines Kippankers in einem solchen Fahrzeugmagnetventil.

Magnetventile zeichnen sich durch den Einsatz elektrischer Leiterspulen aus, welche durch Induktion von Magnetfeldern Kräfte kontrollieren, um direkt oder indirekt Positionen von Verschlusskolben für Ventilöffnungen zu steuern und/oder zu halten. Unter den verschiedenen Bauarten solcher Ventile existiert eine Klasse von Fahrzeugmagnetventilen, also Magnetventilen zur Verwendung beispielsweise in Bremssystemen von Fahrzeugen, in denen das Magnetfeld einer Leiterspule einen ferromagnetisch ausgebildeten Kippanker, welcher direkt oder indirekt die Funktion des Verschlusskolbens übernimmt, in Richtung zur Spule hin zieht, um so je nach Ausbildung des Fahrzeugmagnetventils den Durchfluss eines Fluids durch das Fahrzeugmagnetventil entweder zu erlauben oder zu verhindern.

Das Dokument US 2019/0360609 A1 offenbart ein Beispiel für ein Fahrzeugmagnetventil nach dem Oberbegriff des Anspruchs 1.

Außerhalb des Fahrzeugkontexts ist ein Magnetventil mit einem Kippanker beispielsweise durch das Dokument US 2007/0239042 A1 offenbart.

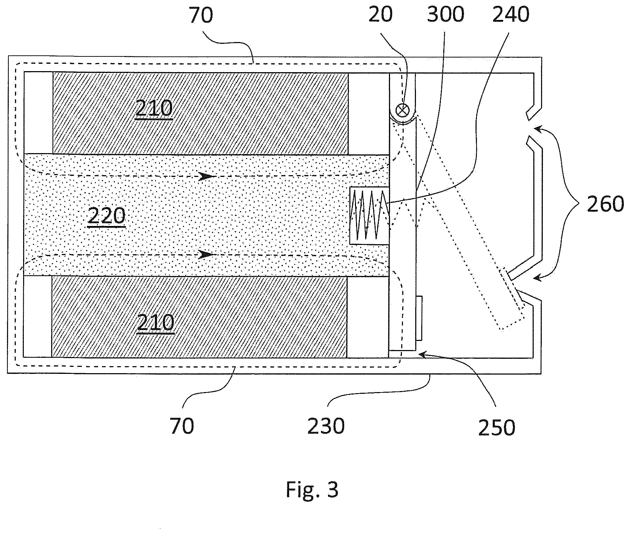

**Fig. 3** zeigt beispielhaft ein Schema zur Funktionsweise eines solchen Fahrzeugmagnetventils. Zu sehen ist eine Schnittebene durch das Fahrzeugmagnetventil, welche die Achse einer elektrischen Leiterspule 210 enthält. Innerhalb der Leiterspule 210 befindet sich zur Verstärkung des Magnetfelds ein Kern 220 aus ferromagnetischem Material (z.B. Eisen). Die Leiterspule 210 ist in ein ebenfalls aus einem ferromagnetischen Material gefertigten zylindrischen Gehäuse 230 eingepasst, welches an einem Ende der Leiterspule 210 (in der Figur auf der rechten Seite des Kerns 220) einen Ventilraum (einer Kavität) ausbildet, die in der gezeigten Schnittebene die Breite des Spulendurchmessers annimmt. Eine der Leiterspule 210 gegenüberliegende Wand des Ventilraums wird dabei von zwei Öffnungen 260 für einen Durchfluss eines Fluids durchbrochen. Im Ventilraum befindet sich ein in diesem Beispiel dem Zylinderquerschnitt des Gehäuses 230 bzw. der Leiterspule 210 kreisscheibenförmig angepasster konventioneller Kippanker 300 von in der dargestellten Schnittebene im Wesentlichen rechteckigem Querschnitt, welcher über einen mit dem Gehäuse 230 verbundenen Angelpunkt um eine senkrecht zur Schnittebene stehende Rotationsachse 20 rotierbar ist und, beispielsweise mittels einer Krafteinwirkung durch eine Feder 240, bei Abwesenheit eines elektrischen Stroms in der Leiterspule 210 eine der Öffnungen 260 des Ventilraums fluiddicht verschließt. Bei Bestromung der Leiterspule 210 wird ein Magnetfeld erzeugt, welches, im ferromagnetischen Kern 220 konzentriert und verstärkt, den ferromagnetischen Kippanker 100 anzieht. Dies führt zu einer Drehbewegung des Kippankers 100 um einen Drehpunkt 20. Befindet sich der Kippanker 100 in der maximal zum Kern 220 gezogenen Position, zielt das ferromagnetische Gehäuse 230 darauf ab, eine geschlossene Magnetschleife 70 aufzubauen, um die Zugkraft zwischen dem Kern 220 und dem Kippanker 100 zu maximieren. Das Ausbilden einer geschlossenen Magnetschleife 70 mit möglichst hohem magnetischem Fluss in dieser Position wirkt sich insbesondere auch verstärkend auf die Kraft aus, welche den Kippanker 100 in diese Position bewegt. Das bedeutet andererseits, dass eine gleiche Kraft mit weniger Strom erreicht werden kann. Somit führen Ausführungsbeispiele dazu, dass die Magnetventile mit weniger Strom angesteuert werden können und die Magnetventile trotzdem mit der gleichen Kraft betätigt werden.

Bei Stromdurchfluss sollte die durch die Leiterspule 210 auf den Kippanker 100 ausgeübte magnetische Zugkraft möglichst groß sein, um eine sichere Position des Kippankers 100 zu gewährleisten. Aufgrund mehrerer Faktoren fließt der zum Magnetfeld gehörende magnetische Fluss in den verschiedenen Materialien mit unterschiedlichem Umfang. Ein wichtiger Faktor ist eine spezifische Eigenschaft des Materials, die sogenannte Permeabilität. Die Permeabilität beispielsweise von Luft ist deutlich niedriger als die Permeabilität ferromagnetischen Materials, wie z.B. eines Kerns 220 aus Eisen. Der Entwickler eines Fahrzeugmagnetventils versucht, soweit wie möglich eine geschlossene Schleife von ferromagnetischen Materialkomponenten zu generieren, beziehungsweise Spalte wie beispielsweise den Spalt 250 zu vermeiden, damit der Magnetfluss leichter fließen und somit die maximale Magnetkraft zwischen festen und beweglichen Teilen erzeugt werden kann. In Magnetsystemen wie dem gezeigten Fahrzeugmagnetventil, in denen sich einige Komponenten der Magnetkette frei bewegen müssen, kann eine Magnetschleife 70 jedoch beispielsweise einen erkennbaren Luftspalt (wie hier etwa den Spalt 250) beinhalten. Der Luftspaltabstand zwischen festen und beweglichen Teilen, wie z.B. einem Gehäuse 230 aus Eisen und einem ferromagnetischem Kippanker 100 aus Edelstahl, muss entsprechend den Bewegungsbedingungen und der Effektivität der Magnetflussschleife 70 optimiert werden. In der dargestellten Figur wird die Kraft auf den Kippanker 100 vergrößert durch eine Führung des magnetischen Flusses durch die ferromagnetischen Materialien des Kippankers 100 sowie des Gehäuses 230, aufgrund welcher sich eine geschlossene Magnetfeldschleife 70 aufbaut. In dieser Magnetfeldschleife 70 wirken Spalte, deren Ausbildung bestimmten Herstellungstoleranzen unterliegt, wie beispielsweise der Spalt 250 zwischen Kippanker 100 und Gehäuse 230, der einer Gewährleistung der Beweglichkeit des Kippankers 100 dient, als magnetische Widerstände, welche die auf den Kippanker 100 ausgeübte Zugkraft verringern. Um eine gleiche magnetische Kraft zu erreichen, ist daher eine stärkerer elektrischer Strom erforderlich. Außerdem wirkt sich die schwächere Bindung des Kippankers 100 in seiner Position am Kern 220 dann, beispielsweise aufgrund von Auslenkungen durch im Fahrzeug auftretende Vibrationen, ungünstig auf eine zuverlässige Funktion des Fahrzeugmagnetventils aus.

Es besteht daher ein Bedarf nach einer weiteren Optimierung des Magnetflusses, beispielsweise durch Reduktion der durch Materialspalte in der Magnetschleife bewirkten magnetischen Widerstände. Dabei soll eine möglichst kosteneffiziente Optimierung gefunden werden.

Zumindest ein Teil der obengenannten Probleme wird durch ein Fahrzeugmagnetventil mit einem Kippanker nach Anspruch 1 und ein Verfahren nach Anspruch 6 gelöst. Die abhängigen Ansprüche definieren weitere vorteilhafte Ausführungsformen der Gegenstände der unabhängigen Ansprüche.

Die vorliegende Erfindung bezieht sich auf ein Fahrzeugmagnetventil mit mindestens einer Ventilöffnung mit einem ferromagnetischen Kippanker für ein Fahrzeugmagnetventil, welches ausgebildet ist, um den Kippanker durch einen Aufbau eines Magnetfeldes in eine von zwei Positionen zu bewegen, so dass ein dem Magnetfeld zugehöriger magnetischer Fluss durch den Kippanker in dieser Position durch mindestens eine Fläche des Kippankers über einen Spalt geführt wird, um eine geschlossene Flussschleife zu bilden. Dabei ist der Kippanker über einen oder mehrere Angelpunkte um eine im Bezug auf das Fahrzeugmagnetventil feste Rotationsachse zwischen den zwei Positionen kippbar ausgebildet. Der Kippanker ist gekennzeichnet durch eine Vergrößerung der mindestens einen Fläche durch eine Randstauchung des Kippankers, ausgebildet, um den magnetischen Fluss durch den Spalt zu erhöhen bzw. den magnetischen Widerstand zu verringern.

In Ausführungsbeispielen besitzt der Kippanker im Wesentlichen die Form einer randgestauchten Scheibe mit einer dem Gehäusequerschnitt angepassten (beispielsweise kreisscheibenförmigen oder polygonalen) Grundfläche. In der durch das Magnetfeld stabilisierten Position des Kippankers fließt der magnetische Fluss beispielsweise durch einen Luftspalt zwischen der Mantelfläche des Kippankers und einem ferromagnetisches Material (z.B. Eisen) aufweisenden Gehäuse des Fahrzeugmagnetventils. Die Randstauchung bedingt eine Vergrößerung der Mantelfläche des Kippankers und damit des Übergangsbereichs zwischen der Mantelfläche des Kippankers und dem Gehäuse. Durch die Randstauchung wird die Höhe der Kante des Kippankers vergrößert, ohne die Gesamtdicke des Kippankers zu vergrößern. Zur Stauchung kann eine Technologie des Vorrändelns wie bei der Münzverarbeitung genutzt werden. Nach der Vergrößerung der Kantenhöhe verringert sich der magnetische Gesamtwiderstand des Luftspalts im Bereich des zylindrischen Teils des Kippankers, der dem Gehäuse zugewandt ist, wodurch der Magnetfluss durch den Spalt erhöht wird. Darüber hinaus kann das Stauchen der Ankerkante gleichzeitig als Kalibrierungsprozess eines Durchmessers für einen Kippanker-Rohling, der selbst beispielsweise aus einem Stanzprozess hervorgehen kann, verwendet werden. Der einer Summe aus Toleranzen des Teilefertigungsprozesses und der Bewegungsbedingungen entsprechende Luftspaltabstand kann verkleinert werden, da die Toleranzen des Kippankerdurchmessers nach dem Randstauchungsprozess geringer sind.

Die Rotationsachse, um welche die Kippbewegung des Kippankers stattfindet, kann dabei durch einen Massenschwerpunkt des Kippankers, aber auch abseits eines solchen Massenschwerpunkts verlaufen. In Ausbildungsbeispielen unterscheiden sich die zwei Positionen des Kippankers oft nur um wenige (beispielsweise 4) Winkelgrade.

Ein Angelpunkt kann beispielsweise als lokale Vertiefung des Kippankers zur Auflage des Kippankers auf einem dafür ausgebildeten Vorsprung oder umgekehrt als ein Vorsprung des Kippankers zur Auflage in einer Vertiefung beispielsweise eines Gehäuses des Fahrzeugmagnetventils ausgebildet sein.

Optional besteht der Kippanker aus einem ferromagnetischen Edelstahl oder umfasst zumindest ein solches Material.

Optional ist der Kippanker zudem mechanisch über einen oder mehrere Angelpunkte auf der Rotationsachse mit dem Rest des Fahrzeugmagnetventils verbunden, welche jeweils als Kugelkalottengelenk ausgebildet sind.

Optional weist der Kippanker weiterhin einen oder mehrere Vertiefungen oder Vorsprünge auf, welche ausgebildet sind, um die Anlage oder den Aufsatz einer oder mehrerer Federn zu ermöglichen, mittels welcher der Kippanker bei Abwesenheit des Magnetfelds in die Position, in welche er nicht durch das Magnetfeld bewegt wird, gekippt und in dieser Position gehalten wird.

Optional enthält der Kippanker einen oder mehrere aufgesetzte oder eingesetzte Formteile aus einem Material (beispielsweise einem Kunststoff), welches geeignet ist, eine fluiddichte Abdeckung einer Ventilöffnung und/oder ein Dämpfen einer Stoßwirkung auf den Kippanker zu gewährleisten.

Ein solches Formteil kann beispielsweise die Funktion eines Dichteelements für eine Ventilöffnung des Fahrzugmagnetventils ausüben, und/oder ein Dämpferelement sein, welches beispielsweise durch Vibrationen des Fahrzeugs auftretende und den Kippanker aus zumindest einer seiner beiden Positionen auslenkende Stöße abschwächen kann. Das Formteil kann an dem Kippanker befestigt oder mit ihm verbunden sein, zum Beispiel durch bauliche Maßnahmen oder auch durch geeignete Klebematerialien.

Ausführungsbeispiele beziehen sich auch auf ein Fahrzeugmagnetventil mit mindestens einer Ventilöffnung sowie einen Kippanker nach einem der vorangehenden Ansprüche.

Das Fahrzeugmagnetventil umfasst dabei mindestens eine Leiterspule, welche bei Bestromung ein Magnetfeld zur Bewegung des Kippankers ausbilden kann. Die Spule kann insbesondere um einen Kern aus ferromagnetischem bzw. magnetisierbarem Material (wie z.B. Eisen) zur Verstärkung des Magnetfelds gewickelt sein. Das Fahrzeugmagnetventil umfasst zudem ein Gehäuse aus einem oder mehreren Teilen, welches auch einen Ventilraum für den Fluss eines Fluids (wie z.B. Luft) und die mindestens eine Ventilöffnung ausbildet sowie den Kippanker umschließt und dessen Bewegung zwischen den zwei Positionen gestattet. Dabei kann der Kippanker beispielsweise im Wesentlichen orthogonal, aber auch parallel zur Spulenachse angeordnet sein. Er muss die Ventilöffnung in seinen beiden Positionen nicht direkt verschließen, sondern kann den Verschluss über weitere Bauteile des Fahrzeugmagnetventils, wie etwa einen durch den Kippanker bewegten Ventilkolben, bewirken. Das Fahrzeugmagnetventil ist zudem ausgebildet, um bei Bestromung der Leiterspule ein Magnetfeld aufzubauen, welches den Kippanker in eine der beiden Positionen bewegt, und ferner, um in dieser Position einen magnetischen Fluss so durch den Kippanker zu leiten, dass eine geschlossene Flussschleife entsteht, durch welche der Kippanker in der Position fixiert wird. Dabei kann der Fluss beispielsweise durch einen Teil des Gehäuses geleitet werden, welcher aus ferromagnetischem bzw. magnetisierbarem Material besteht. Das Fahrzeugmagnetventil kann weiterhin Federn umfassen, welche den Kippanker in diejenige Position bewegen, in welche der Kippanker nicht durch das Magnetfeld bewegt wird. Durch die Federn auf den Kippanker ausgeübte Kräfte werden bei Bestromung der Spule über die magnetische Kraft auf den Kippanker überwunden. Durch die Randstauchung des Kippankers verstärkt sich auch die Kraft, welche den Kippanker bewegt, so dass bei ansonsten gleichen Verhältnissen weniger Strom zur Bestromung der Spule für die Bewegung des Kippankers aufgebracht werden muss. Ausbildungsbeispiele weisen Spulenlängen und/oder einen Durchmesser des Kippankers im Bereich von etwa 2 Zentimetern auf.

Optional ist die Ventilöffnung in einer der zwei Positionen fluiddicht verschlossen und in der anderen der zwei Positionen fluiddurchlässig geöffnet.

Die vorliegende Erfindung bezieht sich auch auf ein Verfahren zur Herstellung eines Kippankers für ein Fahrzeugmagnetventil, welches gekennzeichnet ist durch
- ein Einspannen eines Kippanker-Rohlings in eine Randformmaschine sowie
- ein Randstauchen des Kippanker-Rohlings, um eine Aufwölbung des Kippanker-Rohlings in einem Randbereich auszubilden, so dass ein Kippanker mit Randstauchung von vorbestimmter Größe und Form entsteht.

Der Kippanker-Rohling kann beispielsweise aus einer Platte ausgestanzt werden. Eine Randformmaschine führt den Kippanker-Rohling beispielsweise an einem Rändeleisen vorbei, welches durch Druck zu einer Aufwölbung des Materials des Kippankers in dem Bereich um einen Teil der Oberfläche des Kippankers führt. In einer Position des Kippankers im Fahrzeugmagnetventil, in welcher der Kippanker durch ein Magnetfeld fixiert wird, grenzt dieser Teil der Oberfläche dann an einen Spalt, und ein magnetischer Fluss fließt durch den Teil der Oberfläche des Kippankers und den Spalt, um eine geschlossenen Flussschleife zu bilden. Zur Randstauchung des Kippankers können vorteilhafterweise bekannte Verfahren aus der Münzherstellung verwendet werden.

Durch den Randstauchungsprozess besteht die Möglichkeit, den Kippanker-Rohling mit einem größeren nominalen Durchmesser zu fertigen, mit Beibehaltung der oberen Toleranzgrenzen. Dadurch kann der Kippanker im Fahrzeugmagnetventil beispielsweise näher am Gehäuse liegen, ohne die Bewegungsbedingungen zu beeinflussen. Zusätzlich führt das Stauchen der Kippankerkante dazu, dass der Kippanker mehr ferromagnetisches Material enthält. Beide Effekte, sowohl weniger Spaltabstand als auch mehr ferromagnetisches Material, erhöhen die magnetischen Anziehungskraft des Kippankers auf andere ferromagnetische feste Teile des Fahrzeugmagnetventils, wobei die Anziehungskraft zur Leiterspule bzw. zum Kern der Leiterspule von besonderem Interesse ist. Insbesondere verstärkt sich dadurch bei gleicher Bestromung der Spule auch die Kraft, mit welcher der Kippanker beispielsweise gegen den Druck von Haltefedern oder gegen einen Luftdruck in die neue Position bewegt wird. Bei ansonsten gleicher Bauart des Magnetventils muss daher weniger Strom zum Betrieb der Spule aufgebracht werden, was letztlich zu einem kostengünstigeren Betrieb des Magnetventils beitragen kann.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1A: zeigt als Ausführungsbeispiel der vorliegenden Erfindung einen Kippanker mit Randstauchung.
- Fig. 1B: zeigt einen Querschnitt durch den Kippanker nach der Fig. 1A.
- Fig. 2A: zeigt ein Fahrzeugmagnetventil mit einem Kippanker mit Randstauchung in einer Situation ohne Magnetfeld.
- Fig. 2B: zeigt ein Fahrzeugmagnetventil mit einem Kippanker mit Randstauchung wie in Fig. 2A, jedoch in einer Situation ohne Magnetfeld.
- Fig. 3: zeigt ein bekanntes Schema für ein Fahrzeugmagnetventil mit Kippanker.
- Fig. 4: zeigt Schritte des Verfahrens zur Herstellung eines Kippankers für ein Fahrzeugmagnetventil.

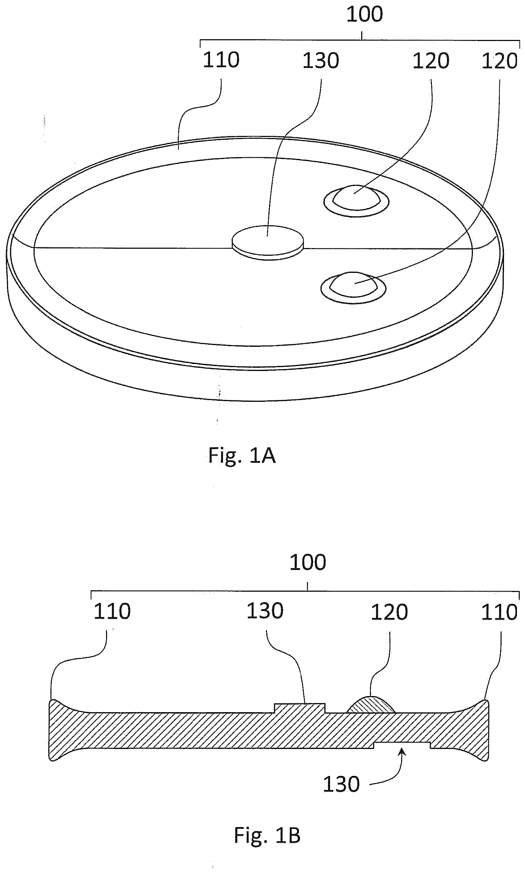

**Fig. 1A** zeigt eine Ansicht für ein Ausführungsbeispiel eines Kippankers 100 mit Randstauchung 110. Der Kippanker 100 hat hier im Wesentlichen die Form einer Münze, über deren Oberfläche sich Köpfe zweier Kugelkalottengelenke 120 sowie eine Federhalterung 130 im Relief erheben. Der Kippanker 100 besteht aus ferromagnetischem bzw. magnetisierbarem Material, wie beispielsweise Eisen oder einem ferromagnetischen Edelstahl. Der Durchmesser des Kippankers 100 kann z.B. etwa 2 cm betragen. Die Grundfläche des Kippankers 100 ist nicht auf die Form einer Kreisscheibe beschränkt; vielmehr können auch Kippanker 100 mit beispielsweise allgemein polygonaler Grundfläche randgestaucht werden.

**Fig. 1B** zeigt einen Schnitt durch den Kippanker 100 nach Figur 1A. In diesem Schnitt ist jeweils an den beiden Enden die Randstauchung 110 erkennbar; ferner sind eine erhabene und eine vertiefte Federhalterung 130 sowie der Kopf eines Kugelkalottengelenks 120 dargestellt.

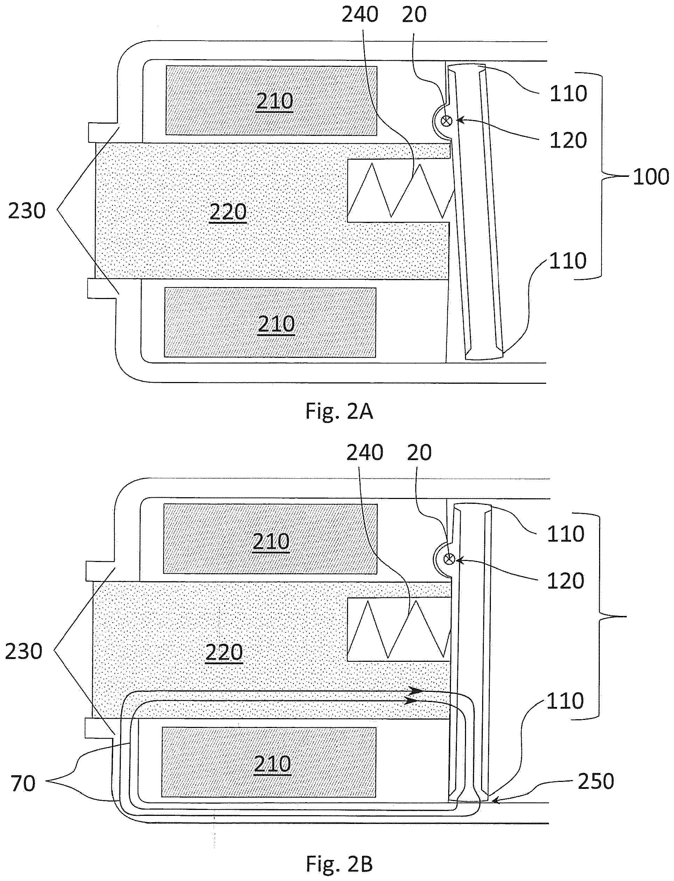

**Fig. 2A** zeigt einen Schnitt durch ein Ausführungsbeispiel eines Fahrzeugmagnetventils, welches einen Kippanker 100 mit Randstauchung 110 umfasst. Das Fahrzeugmagnetventil besitzt im Wesentlichen die Form eines Zylinders; die Schnittebene enthält die Zylinderachse. Die Figur zeigt eine Leiterspule 210, welche zylindrisch um einen Kern 220 aus ferromagnetischem bzw. magnetisierbarem Material gewickelt ist. Die Leiterspule 210 ist dabei in nicht-ferromagnetisches bzw. nichtmagnetisierbares Material, beispielsweise einen Kunststoff, eingefasst. Die Leiterspule 210 und der Kern 220 sind gemeinsam in ein Gehäuse 230 eingepasst, das ebenfalls aus ferromagnetischem bzw. magnetisierbarem Material besteht. Der Kern 220 weist eine Kavität für eine Feder 240 auf, welche den quer vor der Leiterspule 210 angebrachten Kippanker 100 in eine von zwei Positionen drückt. Der Kippanker 100 kann dabei um eine bezüglich des Fahrzeugmagnetventils feste, in der Figur senkrecht zur Bildfläche stehende Rotationsachse 20 rotieren. Er wird eventuell von einer oder mehreren weiteren Federn, welche an der rechten Seite des Kippankers 100 anliegen und hier nicht dargestellt sind, in seiner Position gehalten. Ebenfalls in der Figur nicht dargestellt sind optionale am Kippanker auf- oder eingesetzte Formteile, welche beispielsweise eine fluiddichten Abdichtung einer Ventilöffnung und/oder ein Dämpfen einer Stoßwirkung gewährleisten sollen. Dargestellt ist eine Situation, in der die Leiterspule 210 nicht von einem elektrischen Strom durchflossen wird und deshalb kein Magnetfeld aufbaut. In dieser Situation nimmt der Kippanker 100 unter dem Druck der Feder 240 eine Position ein, welche eine im Bild nicht dargestellte Ventilöffnung des Fahrzeugmagnetventils öffnet oder verschließt. Das Öffnen bzw. Verschließen der Ventilöffnung muss dabei nicht notwendigerweise durch den Kippanker 100 direkt erfolgen, sondern kann über weitere Bauteile im rechts an den Kippanker 100 anschließenden, hier nicht näher dargestellten Ventilraum geschehen. So kann die Bewegung des Kippankers 100 beispielsweise die Bewegung eines Ventilkolbens bewirken.

**Fig. 2B** zeigt den in Figur 2A dargestellten Schnitt für eine Situation, in der die Leiterspule 210 von einem elektrischen Strom durchflossen wird. Ein daraus resultierendes Magnetfeld wird zusätzlich durch den Kern 220 verstärkt und zieht den Kippanker 100 gegen die Kraft der Feder 240 zum Kern 220 hin in die dargestellte Position. In dieser Position wird die in der Beschreibung von Fig. 2A angesprochene geöffnete bzw. verschlossene Ventilöffnung verschlossen bzw. geöffnet. Auch in Figur 1B ist diese Ventilöffnung nicht dargestellt; das Verschließen bzw. Öffnen der Ventilöffnung kann wieder indirekt über weitere, nicht dargestellte Bauteile des Magnetventils erfolgen. Feldlinien des Magnetfeldes werden in der hier dargestellten Position des Kippankers 100 durch das ferromagnetische bzw. magnetisierbare Material des Kerns 220, des Kippankers 100 sowie des Gehäuses 230 geleitet und bilden geschlossene Schleifen 70. In diesen Flusschleifen 70 wirkt der Spalt 250 als magnetischer Widerstand; er schwächt dadurch die Kraft, mit welcher der Kippanker 100 durch das Magnetfeld in seiner Position gehalten wird, ab. Durch die Randstauchung 110 des Kippankers 100 wird die Fläche des Kippankers 100 am Spalt 250 vergrößert. Dies reduziert den magnetischen Widerstand des Spalts 250 und fördert so die Kraft, mit welcher der Kippanker 100 in seiner Position gehalten wird. Zudem wird auch die Kraft, durch welche der Kippanker in diese Position bewegt wird, vergrößert. Im Vergleich zu konventionellen Kippankern ist der Kippanker gemäß Ausführungsbeispielen leichter bewegbar. Dies ist auch in einem Anfangsstadium der Kippbewegung vorteilhaft, d.h. die Kippbewegung kann leichter (z.B. mit weniger Strom) ausgelöst werden.

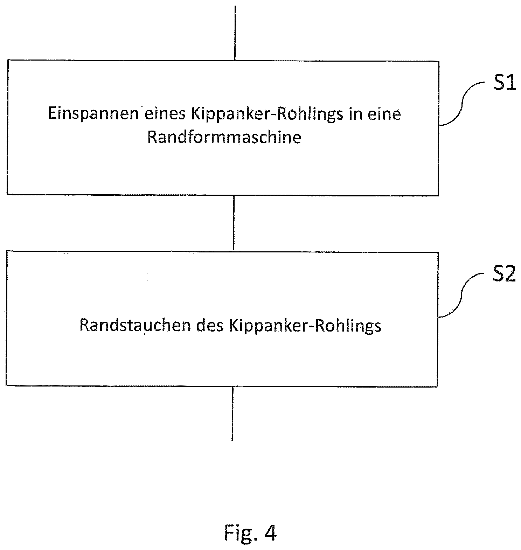

**Fig. 4** zeigt ein Schema für zwei Schritte, welche eine Herstellung eines Kippankers 100 mit Randstauchung 110 für ein Fahrzeugmagnetventil kennzeichnen.

Diese umfassen zunächst ein Einspannen S1 eines Kippanker-Rohlings in eine Randformmaschine. Eine solche Randformmaschine kann beispielsweise zwei gegeneinander bewegte, konzentrisch angeordnete Ringe umfassen, welche in den jeweils dem anderen Ring zugewandten Seite eine Nut aufweisen. Im Verfahrensschritt des Einspannens S1 wird der Kippanker-Rohling zwischen die Ringe mit der zu stauchenden Fläche in den Nuten positioniert.

Der zweite das Verfahren kennzeichnende Schritt ist ein Randstauchen S2 des Kippanker-Rohlings, um eine Aufwölbung des Kippanker-Rohlings in einem Randbereich auszubilden, so dass ein Kippanker 100 mit Randstauchung 110 von vorbestimmter Größe und Form entsteht. In diesem Schritt wird der Kippanker-Rohling durch eine kontrollierte Verminderung des Abstands zwischen den beiden Ringen unter Druck gesetzt und durch eine wechselseitige Bewegung der beiden Ringe in einem Randbereich gleichmäßig aufgewölbt. Dieser Verfahrensschritt kann vorteilhafterweise bei einer bestimmten, beispielsweise auf das Material des Kippankers 100 abgestimmten Temperatur des Kippanker-Rohlings erfolgen.

Die Schritte des Einspannens S1 und des Randstauchens S2 können in ein bestehendes Fertigungsverfahren zur Herstellung des Kippankers 100 aufgenommen werden; dies soll durch die Offenheit des in der Figur gezeigten Schemas dargestellt werden.

Die durch ein solches Verfahren erzielte Stauchung führt zu der gewünschten Oberflächenvergrößerung für eine bessere Hindurchführung des Magnetflusses durch einen Spalt 250. Gleichzeitig bietet das Verfahren die Möglichkeit einer Kalibrierung der Größe des durch die Verfahrensschritte aus dem Kippanker-Rohling hervorgehenden Kippankers 100, so dass der Spaltabstand zusätzlich vermindert werden kann, ohne beispielsweise die Beweglichkeit des Kippankers 100 im Fahrzeugmagnetventil zu gefährden.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### BEZUGSZEICHENLISTE

- 20: Rotationsachse
- 70: Magnetfeldlinie
- 100: Kippanker
- 110: Randstauchung
- 120: Kugelkalottengelenk
- 130: Federhalterung
- 210: Leiterspule
- 220: Kern
- 230: Gehäuse
- 240: Feder
- 250: Spalt
- 260: Ventilöffnung
- 300: konventioneller Kippanker
- S1: Verfahrensschritt Einspannen
- S2: Verfahrensschritt Randstauchen

## Patentansprüche

1. Ein Fahrzeugmagnetventil mit mindestens einer Ventilöffnung (260) mit einem ferromagnetischen Kippanker (100), wobei das Fahrzeugmagnetventil ausgebildet ist, um den Kippanker (100) durch einen Aufbau eines Magnetfeldes in eine von zwei Positionen zu bewegen, so dass ein dem Magnetfeld zugehöriger magnetischer Fluss durch den Kippanker (100) in dieser Position durch mindestens eine Fläche des Kippankers über einen Spalt (250) geführt wird, um eine geschlossene Flussschleife (70) zu bilden, wobei der Kippanker (100) um eine im Bezug auf das Fahrzeugmagnetventil feste Rotationsachse (20) zwischen den zwei Positionen kippbar ausgebildet ist,
**gekennzeichnet durch**
eine Vergrößerung der mindestens einen Fläche des Kippankers (100) durch eine Randstauchung (110) des Kippankers (100), ausgebildet um einen magnetischen Widerstand durch den Spalt (250) zu verringern und so eine Kraft, mit welcher der Kippanker (100) in seiner Position gehalten wird, zu fördern.

2. Das Fahrzeugmagnetventil nach Anspruch 1,
**dadurch gekennzeichnet, dass**
der Kippanker (100) aus einem ferromagnetischen Edelstahl besteht.

3. Das Fahrzeugmagnetventil nach einem der vorhergehenden Ansprüche,
**dadurch gekennzeichnet, dass**
der Kippanker (100) mechanisch über ein oder mehrere Angelpunkte auf der Rotationsachse (20) mit Fahrzeugmagnetventil verbindbar ist, welche jeweils als Kugelkalottengelenk (120) ausgebildet sind.

4. Das Fahrzeugmagnetventil nach einem der vorhergehenden Ansprüche,
**dadurch gekennzeichnet, dass**
der Kippanker (100) einen oder mehrere Vertiefungen oder Vorsprünge (130) aufweist, welche ausgebildet sind, um die Anlage oder den Aufsatz einer oder mehrerer Federn (240) zu ermöglichen, mittels welcher der Kippanker (100) bei Abwesenheit des Magnetfelds in die Position, in welche er nicht durch das Magnetfeld bewegt wird, gekippt und in dieser Position gehalten wird.

5. Das Fahrzeugmagnetventil nach einem der vorhergehenden Ansprüche,
**dadurch gekennzeichnet, dass**
der Kippanker (100) einen oder mehrere aufgesetzte oder eingesetzte Formteile aus einem Material aufweist, welches geeignet ist, eine fluiddichte Abdichtung einer Ventilöffnung (260) und/oder ein Dämpfen einer Stoßwirkung auf den Kippanker zu gewährleisten.

6. Das Fahrzeugmagnetventil nach einem der vorhergehenden Ansprüche,
**dadurch gekennzeichnet, dass**
die Ventilöffnung (260) in einer der zwei Positionen fluiddicht verschlossen und in der anderen der zwei Positionen fluiddurchlässig geöffnet ist.

7. Ein Verfahren zur Herstellung eines Fahrzeugmagnetventils nach einem der Ansprüche 1-6 **gekennzeichnet durch**
- Einspannen (S1) eines Kippanker-Rohlings in eine Randformmaschine;
- Randstauchen (S2) des Kippanker-Rohlings, um eine Aufwölbung des Kippanker-Rohlings in einem Randbereich auszubilden, so dass ein Kippanker (100) mit Randstauchung (110) von vorbestimmter Größe und Form entsteht.

## Claims

1. A vehicle solenoid valve having at least one valve opening (260) with a ferromagnetic tilting armature (100), wherein the vehicle solenoid valve is configured to move the tilting armature (100), into one of two positions by a build-up of a magnetic field, so that a magnetic flux associated with the magnetic field is in this position conducted by the tilting armature (100) through at least one surface of the tilting armature across a gap (250) in order to form a closed flux loop (70), wherein the tilting armature (100) is configured to be tiltable between the two positions about an axis of rotation (20) that is fixed with respect to the vehicle solenoid valve,
**characterised by**
an enlargement of the at least one surface of the tilting armature (100) by way of an edge upset (110) of the tilting armature (100), configured to reduce a magnetic resistance through the gap (250) in order to thus promote a force whereby the tilting armature (100) is held in its position.

2. The vehicle solenoid valve according to claim 1,
**characterised in that**
the tilting armature (100) is composed of a ferromagnetic high-grade steel.

3. The vehicle solenoid valve according to any of the preceding claims,
**characterised in that**
the tilting armature (100) is mechanically connectable to vehicle solenoid valve by way of one or more pivots on the axis of rotation (20), each which pivots is configured as a spherical-cap joint (120).

4. The vehicle solenoid valve according to any of the preceding claims,
**characterised in that**
the tilting armature (100) has one or more depressions or projections (130) which are configured to allow the abutment or the mounting of one or more springs (240) by means of which, in the absence of the magnetic field, the tilting armature (100) is tilted into and held in the position into which it is not moved by the magnetic field.

5. The vehicle solenoid valve according to any of the preceding claims,
**characterised in that**
the tilting armature (100) has one or more mounted or inserted molded parts composed of a material that is suitable for ensuring a fluid-tight seal of a valve opening (260) and/or for damping of an impact against the tilting armature.

6. The vehicle solenoid valve according to any of the preceding claims,
**characterised in that**
the valve opening (260) is closed in fluid-tight fashion in one of the two positions and is open, so as to allow a passage of fluid, in the other of the two positions.

7. A method for producing a vehicle solenoid valve according to any of claims 1 - 6, **characterised by**
- clamping (S1) a tilting armature blank into an edge forming machine;
- edge-upsetting (S2) the tilting armature blank in order to form a bulge of the tilting armature blank in an edge region, such that a tilting armature (100) with an edge upset (110) of predetermined size and shape is created.

## Revendications

1. Electrovanne de véhicule comprenant au moins une ouverture (260) de vanne ayant une armature (100) ferromagnétique basculante, dans laquelle l'électrovanne de véhicule est constituée pour mettre l'armature (100) basculante par l'établissement d'un champ magnétique dans l'une de deux positions, de manière à ce qu'un flux magnétique, appartenant au champ magnétique, dans l'armature (100) basculante, passe dans cette position, à travers au moins une surface de l'armature basculante, par l'intermédiaire d'une fente (250), pour former une boucle (70) de flux fermée, l'armature (100) basculante étant constituée pour pouvoir basculer entre les deux positions autour d'un axe (20) de rotation fixe par rapport à l'électrovanne de véhicule,
**caractérisée par**
un agrandissement d'au moins une surface de l'armature (100) basculante, par un refoulement (110) du bord de l'armature (100) basculante, constitué pour diminuer une résistance magnétique par la fente (250) et pour transporter ainsi une force, par laquelle l'armature (100) basculante est maintenue dans sa position.

2. Electrovanne de véhicule suivant la revendication 1,
**caractérisée en ce que**
l'armature (100) basculante est en acier fin ferromagnétique.

3. Electrovanne de véhicule suivant l'une des revendications précédentes,
**caractérisée en ce que**
l'armature (100) basculante peut être reliée mécaniquement à l'électrovanne de véhicule par un ou par plusieurs points (20) d'articulation, qui sont constitués chacun sous la forme d'une articulation (120) à calotte sphérique.

4. Electrovanne de véhicule suivant l'une des revendications précédentes,
**caractérisée en ce que**
l'armature (100) basculante a un ou plusieurs évidements ou saillies (130), qui sont constitués pour rendre possible l'application ou la pose d'un ou de plusieurs ressorts (240), au moyen duquel l'armature (100) basculante est, en l'absence du champ magnétique, basculée dans la position dans laquelle elle n'est pas déplacée par le champ magnétique et est maintenue dans cette position.

5. Electrovanne de véhicule suivant l'une des revendications précédentes,
**caractérisée en ce que**
l'armature (100) basculante a une ou plusieurs pièces moulées posées ou insérées en un matériau, qui est propre à assurer une étanchéité étanche au fluide d'une ouverture (260) de la vanne et/ou un amortissement de l'action d'un choc sur l'armature basculante.

6. Electrovanne de véhicule suivant l'une des revendications précédentes,
**caractérisée en ce que**
l'ouverture (260) de la vanne est fermée d'une manière étanche au fluide, dans l'une des deux positions, et est ouverte de manière perméable au fluide, dans l'autre des deux positions.

7. Procédé de fabrication d'une électrovanne de véhicule suivant l'une des revendications 1 à 6,
**caractérisé par**
- blocage (S1) d'une ébauche d'armature basculante dans une machine de formage de bord ;
- refoulement (S2) du bord de l'ébauche d'armature basculante pour former un cintrage de l'ébauche d'armature basculante dans une partie de bord, de manière à créer une armature (100) basculante ayant un refoulement (110) de bord de dimension et forme déterminée à l'avance.
